# EUROPEAN PATENT APPLICATION

(11) **EP 3 334 070 A1**
(43) Date of publication of application: **13.06.2018**
(21) Application number: 16832701.3
(22) Date of filing: 12.07.2016
(51) Int. Cl.: H04J 11/00, H04J 99/00

(54) **WIRELESS COMMUNICATION SYSTEM, BASE STATION, AND WIRELESS COMMUNICATION METHOD**

(30) Priority: 04.08.2015 JP 2015153976
(71) Applicant: Mitsubishi Electric Corporation, Chiyoda-ku Tokyo 100-8310 (JP)
(72) Inventor: UMEHARA Hideo, Tokyo 100-8310 (JP); SUZUKI Kuniyuki, Tokyo 100-8310 (JP); MOCHIZUKI Mitsuru, Tokyo 100-8310 (JP)
(74) Representative: Sajda, Wolf E.
(86) International application number: PCT/JP2016/070491
(87) International publication number: WO 2017/022422

(57) **Abstract**

The invention disclosed in the present description relates to a radio communication system, a base station, and a radio communication method achieving switching of analog control such as phase or amplitude control, while suppressing reduction in power efficiency resulting from a multipath propagation channel. The radio communication system relating to this invention makes radio communication through transmission and reception of a plurality of radio communication frames. The plurality of radio communication frames includes successive radio communication frames, at least one of which is a radio communication frame including an effective symbol, and a cyclic prefix and a non-transmission interval added to the effective symbol.

## Description

### Technical Field

The invention disclosed in the present description relates to a radio communication system that makes radio communication through transmission and reception of a plurality of radio communication frames, particularly relates to a radio communication system that makes radio communication between a base station device and a communication terminal device such as a mobile terminal device.

### Background Art

A standardization group for mobile communication systems, the 3^{rd} Generation Partnership Project (3GPP), has examined a communication system called Long Term Evolution (LTE) for radio areas, and also called System Architecture Evolution (SAE) for a system overall configuration including a core network and a radio access network (these networks will also be called a network collectively) (see Non-Patent Documents 1 to 9, for example). This communication system is also called the 3.9 Generation (3.9G) system.

An LET access system includes orthogonal frequency division multiplexing (OFDM) for a downlink direction and single carrier frequency division multiple access (SC-FDMA) for an uplink direction. Unlike wideband code division multiple access (W-CDMA), LTE does not involve circuit switch but it employs only a packet transmission system.

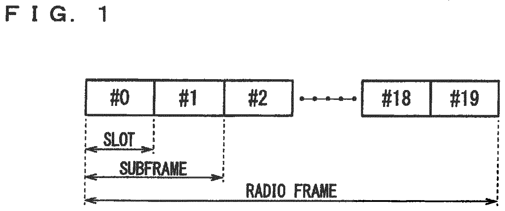

Non-Patent Document 1 (Chapter 5) describes a decision about the configuration of a radio communication frame in an LTE system made by the 3GPP. This decision will be described using FIG. 1. FIG. 1 describes the configuration of a radio communication frame used in an LTE communication system. Referring to FIG. 1, one radio communication frame (radio frame) is 10 ms. The radio communication frame is divided into 10 subframes of an equal size. The subframe is divided into two slots of an equal size.

Each radio communication frame includes a downlink synchronization signal in each of a first subframe and a sixth subframe. The synchronization signal includes a primary synchronization signal (P-SS) and a secondary synchronization signal (S-SS).

Non-Patent Document 1 (Chapter 5) describes a decision about a channel configuration in an LTE system made by the 3GPP. Non-Patent Document 1 assumes that a closed subscriber group (CSG) cell uses the same channel configuration as a non-CSG cell.

A physical broadcast channel (PBCH) is a channel for downlink transmission from a base station device (hereinafter may be called a "base station" simply) to a communication terminal device (hereinafter may be called a "communication terminal" simply) such as a mobile terminal device (hereinafter may be called a "mobile terminal" simply). A BCH transport block is mapped to each of four subframes at intervals of 40 ms. There is no clear signaling indicating timing of 40 ms.

A physical control format indicator channel (PCFICH) is a channel for downlink transmission from a base station to a communication terminal. The PCFICH is for notification of the number of orthogonal frequency division multiplexing (OFDM) symbols used for PDCCHs from the base station to the communication terminal. The PCFICH is transmitted in units of subframes.

A physical downlink control channel (PDCCH) is a channel for downlink transmission from a base station to a communication terminal. The PDCCH is for notification of resource allocation information about a downlink shared channel (DL-SCH) as one of transport channels described later, resource allocation information about a paging channel (PCH) as one of transport channels described later, and hybrid automatic repeat request (HARQ) information about the DL-SCH. The PDCCH is used for conveyance of an uplink scheduling grant. The PDCCH is used for conveyance of acknowledgement (Ack)/negative acknowledgement (Nack) as a response signal to uplink transmission. The PDCCH is also called an L1/L2 control signal.

A physical downlink shared channel (PDSCH) is a channel for downlink transmission from a base station to a communication terminal. A downlink shared channel (DL-SCH) as a transport channel and a PCH as a transport channel are mapped to the PDSCH.

A physical multicast channel (PMCH) is a channel for downlink transmission from a base station to a communication terminal. A multicast channel (MCH) as a transport channel is mapped to the PMCH.

A physical uplink control channel (PUCCH) is a channel for uplink transmission from a communication terminal to a base station. The PUCCH is used for conveyance of Ack/Nack as a response signal to downlink transmission. The PUCCH is used for conveyance of a channel quality indicator (CQI) report. The CQI is quality information indicating the quality of received data or the quality of a communication channel. The PUCCH is also used for conveyance of a scheduling request (SR).

A physical uplink shared channel (PUSCH) is a channel for uplink transmission from a communication terminal to a base station. An uplink shared channel (UL-SCH) as one of transport channels is mapped to the PUSCH.

A physical hybrid ARQ (HARQ) indicator channel (PHICH) is a channel for downlink transmission from a base station to a communication terminal. The PHICH is used for conveyance of Ack/Nack as a response signal to uplink transmission. A physical random access channel (PRACH) is a channel for uplink transmission from a communication terminal to a base station. The PRACH is used for conveyance of a random access preamble.

A downlink reference signal (RS) is a known symbol in an LTE communication system. The following five types of downlink reference signals are defined. Cell-specific reference signals (CRSs), MBSFN reference signals, data demodulation reference signals (DM-RSs) as UE-specific reference signals, positioning reference signals (PRSs), and channel-state information reference signals (CSI-RSs). Measurement of a physical layer in a communication terminal includes measurement of reference signal received power (PSRP).

A transport channel described in Non-Patent Document 1 (Chapter 5) will be described. A broadcast channel (BCH) as one of downlink transport channels is broadcast to an entire coverage of a corresponding base station (cell). The BCH is mapped to a physical broadcast channel (PBCH).

Retransmission control using a hybrid ARQ (HARQ) is applied to a downlink shared channel (DL-SCH). The DL-SCH can be broadcast to an entire coverage of a base station (cell). The DL-SCH supports dynamic or semi-static resource allocation. The semi-static resource allocation is also called persistent scheduling. The DL-SCH supports discontinuous reception (DRX) of a communication terminal for reducing power consumption of the communication terminal. The DL-SCH is mapped to a physical downlink shared channel (PDSCH).

A paging channel (PCH) supports the DRX of a communication terminal for allowing reduction in power consumption of the communication terminal. The PCH is requested to be broadcast to an entire coverage of a base station (cell). The PCH is mapped to a physical resource such as a physical downlink shared channel (PDSCH) available for dynamic traffic.

A multicast channel (MCH) is used for broadcast to an entire coverage of a base station (cell). The MCH supports SFN combining of multimedia broadcast multicast service (MBMS) (MTCH and MCCH) in multi-cell transmission. The MCH supports semi-static resource allocation. The MCH is mapped to a PMCH.

Retransmission control using a hybrid ARQ (HARQ) is applied to an uplink shared channel (UL-SCH) as one of uplink transport channels. The UL-SCH supports dynamic or semi-static resource allocation. The UL-SCH is mapped to a physical uplink shared channel (PUSCH).

A random access channel (RACH) is limited to control information. The RACH has the risk of collision. The RACH is mapped to a physical random access channel (PRACH).

An HARQ will be described. The HARQ is a technique of improving the communication quality of a transmission channel using a combination of automatic repeat request (ARQ) and forward error correction. The HARQ acts advantageously to enable the forward error correction by retransmission, even if the communication quality of the transmission channel changes. In particular, in conducting retransmission, combining a reception result of initial transmission and a reception result of retransmission achieves further quality improvement.

An example of a retransmission method will be described. If a receiver fails to decode received data correctly, in other words, if a cyclic redundancy check (CRC) error occurs (CRC = NG), the receiver transmits "Nack" to a transmitter. The transmitter having received "Nack" retransmits the data. If the receiver succeeds in decoding the received data correctly, in other words, if the CRC error does not occur (CRC = OK), the receiver transmits "Ack" to the transmitter. The transmitter having received "Ack" transmits subsequent data.

A logical channel described in Non-Patent Document 1 (Chapter 6) will be described. A broadcast control channel (BCCH) is a downlink channel for broadcast system control information. The BCCH as a logical channel is mapped to a broadcast channel (BCH) or a downlink shared channel (DL-SCH) as a transport channel.

A paging control channel (PCCH) is a downlink channel for transmission of change in paging information and change in system information. The PCCH is used if the cell location of a communication terminal is not familiar to a network. The PCCH as a logical channel is mapped to a paging channel (PCH) as a transport channel.

A common control channel (CCCH) is a channel for transmission control information between a communication terminal and a base station. The CCCH is used if the communication terminal does not have an RRC connection to a network. In a downlink direction, the CCCH is mapped to a downlink shared channel (DL-SCH) as a transport channel. In an uplink direction, the CCCH is mapped to an uplink shared channel (UL-SCH) as a transport channel.

A multicast control channel (MCCH) is a downlink channel for point-to-multipoint transmission. The MCCH is used for transmission of MBMS control information from a network to a communication terminal through one MTCH or several MTCHs. The MCCH is used only by a communication terminal in a state of receiving MBMS. The MCCH is mapped to a multicast channel (MCH) as a transport channel.

A dedicated control channel (DCCH) is a channel for point-to-point transmission of dedicated control information between a communication terminal and a network. The DCCH is used if the communication terminal has an RRC connection. The DCCH is mapped to an uplink shared channel (UL-SCH) in the uplink and to a downlink shared channel (DL-SCH) in the downlink.

A dedicated traffic channel (DTCH) is a channel for point-to-point communication with a dedicated communication terminal for transmission of user information. The DTCH exists both in the uplink and the downlink. The DTCH is mapped to the uplink shared channel (UL-SCH) in the uplink and to a downlink shared channel (DL-SCH) in the downlink.

A multicast traffic channel (MTCH) is a downlink channel for transmission of traffic data from a network to a communication terminal. The MTCH is used only by a communication terminal in a state of receiving MBMS. The MTCH is mapped to a multicast channel (MCH).

A CGI stands for a cell global identifier. An ECGI stands for an E-UTRAN cell global identifier. A closed subscriber group (CSG) cell is introduced in LTE, Long Term Evolution Advanced (LET-A) described later, and Universal Mobile Telecommunication System (UMTS).

A closed subscriber group (CSG) cell is a cell in which a permissible subscriber is specified by an operator (this cell may be called a "cell for specific subscribers"). The specified subscriber is allowed to access one or more cells of a public land mobile network (PLMN). The one or more cells allowing access by the specified subscriber are called "CSG cell(s)." Meanwhile, access to the PLMN is limited.

A CSG cell is a part of a PLMN for broadcast of a specific CSG identity (CSG ID; CSG-ID) and for broadcast of "TRUE" in a CSG indication. An authorized member of a subscriber group registered in advance accesses the CSG cell using the CSG-ID as access permission information.

A CSG-ID is broadcast by a CSG cell or a cell. An LTE communication system includes a plurality of CSG-IDs. The CSG-IDs are used by a communication terminal (UE) for facilitating access from CSG-related members.

The location of a communication terminal is tracked in units of areas each formed of one or more cells. The location tracking is for enabling tracking of the location of the communication terminal even in an idle state and calling the communication terminal, in other words, for enabling an incoming call to the communication terminal. The area for tracking the location of the communication terminal is called a tracking area.

A base station called Home-NodeB (Home-NB; HNB) or Home-eNodeB (Home-eNB; HeNB) has been examined by the 3GPP. The HNB in the UTRAN and the HeNB in the E-UTRAN are base stations for access service for home use, corporate use, or commercial use, for example. Non-Patent Document 2 discloses three different modes of making access to the HeNB and the HNB. More specifically, Non-Patent Document 2 discloses an open access mode, a closed access mode, and a hybrid access mode.

Each of these modes has the following feature. In the open access mode, the HeNB and the HNB are operated as normal cells for a normal operator. In the closed access mode, the HeNB and the HNB are operated as CSG cells. These CSG cells allows access only from CSG members. In the hybrid access mode, the HeNB and the HNB are operated as CSG cells further allowing access from non-CSG members simultaneously. In other words, a cell in the hybrid access mode (also called a hybrid cell) supports both the open access mode and the closed access mode.

According to the 3GPP, a PCI range is defined based on all physical cell identities (PCIs). The PCI range covers PCIs reserved by a network for use by CSG cells (see Chapter 10.5.1.1 of Non-Patent Document 1). Division of the PCI range may also be called PCI split. Information about the PCI split (also called PCI split information) is broadcast in system information from a base station to a communication terminal being served by this base station. Being served by the base station means assuming the base station as a serving cell.

Non-Patent Document 3 discloses the basic operation of a communication terminal using the PCI split. A communication terminal without PCI split information needs to conduct cell search using all PCIs, for example, using all 504 codes. In contrast, a communication terminal with PCI split information is allowed to conduct cell search using this PCI split information.

Further, the 3GPP has proceeded further in developing standards for Long Term Evolution Advanced (LTE-A) in Release 10 (see Non-Patent Documents 4 and 5). The configuration of LTE-A is determined using the radio area communication system for LTE as a basis and adding some novel techniques to this communication system.

An LTE-A system is to support wider transmission bandwidths up to 100 MHz. To achieve this, a carrier aggregation (CA) for combination (also called aggregation) of two or more component carriers (CCs) has been examined.

User equipment to form a CA has a network (NW) and one RRC connection. One serving cell provides NAS mobility information and security input through the RRC connection. This cell is called a primary cell (PCell). A carrier corresponding to the PCell in the downlink is a downlink primary component carrier (DL PCC). A carrier corresponding to the PCell in the uplink is an uplink primary component carrier (UL PCC).

A secondary cell (SCell) is configured in response to the capability of UE to form a set of a PCell and a serving cell. A carrier corresponding to an SCell in the downlink is a downlink secondary component carrier (DL SCC). A carrier corresponding to the SCell in the uplink is an uplink secondary component carrier (UL SCC).

One PCell, and a serving cell formed of one or more SCells form a set for one UE.

A novel technique relating to LTE-A includes a technique for supporting wider bandwidths (wider bandwidth extension) and the coordinated multiple point transmission and reception (CoMP) technique. Non-Patent Document 6 describes CoMP examined to be employed for LTE-A by the 3GPP.

The amount of traffic over a mobile network has been increasing. A communication speed through the mobile network has been increasing further. If LTE and LTE-A services are started on a full scale, a communication speed and a traffic amount are expected to increase further.

Additionally, as smartphones and table terminals have become popular, the amount of traffic through cellular-system radio communication has been increased explosively. Hence, shortage of radio resources has been a concern all over the world.

In response to the problem of increase in a traffic amount, the 3GPP has proceeded further in developing written standards in Release 12 version. According to the written standards in Release 12 version, use of a small eNB has been examined in response to a massive amount of traffic in the future. For example, according to a technique being examined intended to increase a communication capacity, a large number of small eNBs are installed to form a large number of small cells, thereby increasing efficiency of frequency usage.

In response to a case where a macro cell and a small cell in these cells overlap each other, dual connectivity has been discussed as a technique for connection of a communication terminal to both the macro cell and the small cell (see Non-Patent Document 8). Non-Patent Document 8 discloses the dual connectivity as a technique of making the communication terminal access both the macro cell and the small cell if the macro cell and the small cell overlap each other.

There has also been a fifth generation (hereinafter may be called "5G") radio access system responsive to advanced mobile communication. Putting this system to service is considered to be started in 2020 and afterward. For example, a group called METIS in Europe has summarized requirements for 5G (see Non-Patent Document 9).

The 5G radio access system has been required to achieve further reduction in power consumption and further reduction in cost of a device by multiplying a system capacity by 1000 times, multiplying a data transmission speed by 100 times, reducing data processing delay to one tenth (1/10), and multiplying the number of simultaneous connections of a communication terminal by 100 times compared to those of an LTE system.

These requirements may be satisfied by using a frequency in a wider bandwidth to increase the volume of data transmission or by increasing efficiency of frequency usage to increase a data transmission speed. To achieve this, a technique such as multiple-input multiple-output (MIMO) or beam forming achieving spatial multiplexing by the use of a multi-element antenna has been examined.

To employ MIMO or beam forming using a multi-element antenna, the phase and the output of each antenna are required to be adjusted. For example, controlling the phase and the output using an analog component involves a given period of time.

During communication in radio space, a transmitted wave is reflected, for example, on a building to reach a receiver with a time lag. In this way, a multipath propagation channel is formed. A signal to be conveyed with a time lag by the influence of the multipath propagation channel causes intersymbol interference.

In an LTE system, intersymbol interference is reduced by providing a guard interval GI. The GI is formed by known methods of inserting the same waveform as that of the end of an OFDM symbol into the head of the symbol (a "cyclic prefix" and may be called a "CP" below), and providing a non-transmission interval.

### Prior Art Documents

### Non-Patent Documents

Non-Patent Document 1: 3GPP TS 36.300 V 11.7.0
Non-Patent Document 2: 3GPP S1-083461
Non-Patent Document 3: 3GPP R2-082899
Non-Patent Document 4: 3GPP TR 36.814 V 9.0.0
Non-Patent Document 5: 3GPP TR 36.912 V 10.0.0
Non-Patent Document 6: 3GPP TR 36.819 V 11.1.0
Non-Patent Document 7: 3GPP TS 36.141 V 11.1.0
Non-Patent Document 8: 3GPP TR 36.842 V 0.2.0
Non-Patent Document 9: "Scenarios, requirements and KPIs for 5G mobile and wireless system," [online], April 29, 2013 ICT-317669-METIS/D1.1, [Searched on October 20, 2014], the Internet < URL: http://www.metis2020.com/documents/deliverables/<

### Summary

### Problem to be Solved by the Invention

A base station using a multi-element antenna for the purpose of increasing throughput has the following problem.

A cyclic prefix (CP) used in an LTE system for reducing intersymbol interference increases the temporal length of the CP caused by increase in delay of a symbol resulting from a multipath propagation channel. This reduces the power efficiency of a base station during radio signal transmission at the base station.

Further, using a CP fails to form a non-transmission state having a given period of time required for switching (changing) beam directivity by a multi-element antenna considered to be employed in a 5G radio system. Changing beam directivity during transmission of a radio signal causes disturbance of a waveform. The disturbance of the waveform means the occurrence of an unwanted component on a frequency axis. This unwanted component becomes an interfering wave with a different radio system.

The invention disclosed in the present description is intended to solve the above-described problem. This invention relates to a radio communication system, a base station, and a radio communication method achieving switching of analog control such as phase or amplitude control, while suppressing reduction in power efficiency resulting from a multipath propagation channel.

### Means to Solve the Problem

A radio communication system according to one aspect of the invention disclosed in the present description makes radio communication through transmission and reception of a plurality of radio communication frames. The plurality of radio communication frames includes successive radio communication frames, at least one of which is a radio communication frame including an effective symbol, and a cyclic prefix and a non-transmission interval added to the effective symbol.

A base station according to one aspect of the invention disclosed in the present description makes radio communication through transmission and reception of a plurality of radio communication frames. The plurality of radio communication frames includes successive radio communication frames, at least one of which is a radio communication frame including an effective symbol, and a cyclic prefix and a non-transmission interval added to the effective symbol.

A radio communication method according to one aspect of the invention disclosed in the present description is a method of making radio communication through transmission and reception of a plurality of radio communication frames. The plurality of radio communication frames includes successive radio communication frames, at least one of which is a radio communication frame including an effective symbol, and a cyclic prefix and a non-transmission interval added to the effective symbol.

### Effects of the Invention

The radio communication system according to one aspect of the invention disclosed in the present description makes radio communication through transmission and reception of a plurality of radio communication frames. The plurality of radio communication frames includes successive radio communication frames, at least one of which is a radio communication frame including an effective symbol, and a cyclic prefix and a non-transmission interval added to the effective symbol.

This configuration achieves switching of analog control such as phase or amplitude control, while suppressing reduction in power efficiency resulting from a multipath propagation channel.

The base station according to one aspect of the invention disclosed in the present description makes radio communication through transmission and reception of a plurality of radio communication frames. The plurality of radio communication frames includes successive radio communication frames, at least one of which is a radio communication frame including an effective symbol, and a cyclic prefix and a non-transmission interval added to the effective symbol.

This configuration achieves switching of analog control such as phase or amplitude control, while suppressing reduction in power efficiency resulting from a multipath propagation channel.

The radio communication method according to one aspect of the invention disclosed in the present description is a method of making radio communication through transmission and reception of a plurality of radio communication frames. The plurality of radio communication frames includes successive radio communication frames, at least one of which is a radio communication frame including an effective symbol, and a cyclic prefix and a non-transmission interval added to the effective symbol.

This configuration achieves switching of analog control such as phase or amplitude control, while suppressing reduction in power efficiency resulting from a multipath propagation channel.

These and other objects, features, aspects, and advantages of the invention disclosed in the present description will become more apparent from the following detailed description and the accompanying drawings.

### Brief Description of the Drawings

- FIG. 1: is for describing the configuration of a radio communication frame used in an LTE communication system.
- FIG. 2: is a block diagram showing the entire configuration of an LTE communication system discussed by the 3GPP.
- FIG. 3: is a block diagram showing the configuration of a mobile terminal illustrated in FIG. 2 as a communication terminal according to an embodiment.
- FIG. 4: is a block diagram showing the configuration of a base station illustrated in FIG. 2 as a base station according to the embodiment.
- FIG. 5: is a block diagram showing the configuration of an MME according to the embodiment.
- FIG. 6: is a flowchart briefly illustrating a flow from a cell search to idle state operation by the communication terminal (UE) in the LTE communication system.
- FIG. 7: illustrates the concept of a cell configuration in which a macro eNB and a small eNB are mixed.
- FIG. 8: illustrates the configuration of a transmitter (base station) of a multi-element antenna employing a digital phase switching system according to the embodiment.
- FIG. 9: illustrates the configuration of a transmitter (base station) of a multi-element antenna employing an analog phase switching system according to the embodiment.
- FIG. 10: illustrates the configuration of a radio communication frame in an LTE system.
- FIG. 11: illustrates an exemplary method of forming a GI according to the embodiment.
- FIG. 12: illustrates an example of propagation characteristics analysis according to the embodiment.
- FIG. 13: illustrates an example of propagation characteristics analysis according to the embodiment.
- FIG. 14: illustrates a frame format according to another embodiment.
- FIG. 15: illustrates a list of frame formats each including a combination of the temporal length of a non-transmission interval and the temporal length of a CP according to the embodiment.
- FIG. 16: illustrates a handover procedure according to the embodiment taken by LTE.
- FIG. 17: illustrates an exemplary method of forming a GI according to the embodiment.
- FIG. 18: illustrates an exemplary method of forming a GI according to a further embodiment employed if the temporal length of the GI is shortened to conform to timing of not implementing beam directivity switching.
- FIG. 19: illustrates the characteristics of a non-transmission interval and those of a CP.
- FIG. 20: illustrates the characteristics of a non-transmission interval and those of a CP.
- FIG. 21: illustrates the configuration of a transmitter that generates a plurality of beams by following an analog phase switching system according to aa further embodiment.
- FIG. 22: describes a multipath propagation channel according to the embodiment.
- FIG. 23: describes the multipath propagation channel according to the embodiment.

### Description of Embodiment(s)

Embodiments of the invention will be described below by referring to the accompanying drawings. The drawings are schematic drawings. The sizes of images and the positions of such images shown in different drawings are not always depicted correctly but can be changed, where appropriate. In the description given below, comparable components are identified by the same sign and illustrated in the drawings with the same sign. Such components are also given the same name and the same function. Thus, in some cases, such components will not be described again in detail.

### First Embodiment

A radio communication system, a base station, and a radio communication method according to this embodiment will be described below.

### Configuration

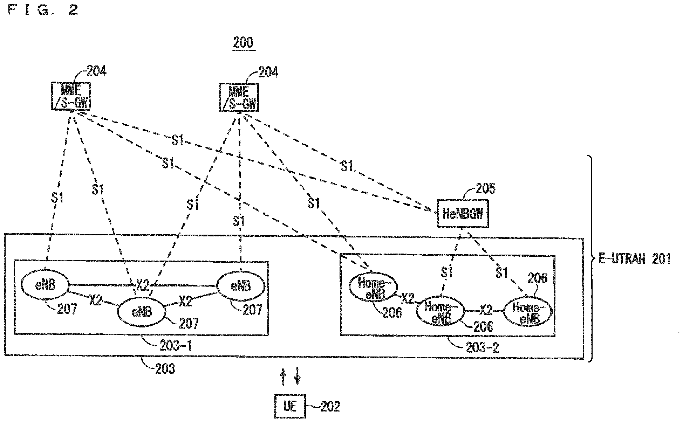

FIG. 2 is a block diagram showing the entire configuration of an LTE communication system 200 discussed by the 3GPP. The communication system 200 will be described below by referring to FIG. 2.

A radio access network is called an evolved universal terrestrial radio access network (E-UTRAN) 201. A mobile terminal device (hereinafter called a "mobile terminal (user equipment: UE)") 202 as a communication terminal device is allowed to make radio communication with a base station device (hereinafter called a "base station (E-UTRAN NodeB: eNB)") 203, and transmits and receives signals through radio communication.

The "communication terminal device" mentioned herein includes not only a mobile terminal device such as a movable portable phone terminal device but also a device not to move such as a sensor. In the description given below, the "communication terminal device" may be called a "communication terminal" simply.

If a control protocol for the mobile terminal 202 such as radio resource control (RRC), and user planes such as a packet data convergence protocol (PDCP), radio link control (RLC), medium access control (MAC), and physical layer (PHY) are terminated in the base station 203, one or a plurality of base stations 203 is used for forming the E-UTRAN.

Control protocol radio resource control (RRC) between the mobile terminal 202 and the base station 203 is responsible for broadcast, paging, RRC connection management, etc. The state of the base station 203 and that of the mobile terminal 202 under the RRC include RRC_IDLE and RRC_CONNECTED.

The following is performed in the state RRC_IDLE: public land mobile network (PLMN) selection, system information (SI) broadcast, paging, cell reselection, mobility, etc.

In the state RRC_CONNECTED, the mobile terminal has an RRC connection and is allowed to transmit and receive data to and from a network. The following is performed in the state RRC_CONNECTED: handover (HO), measurement of a neighbour cell, etc.

The base station 203 is classified into an eNB 207 and a Home-eNB 206. The communication system 200 includes an eNB group 203-1 with a plurality of eNBs 207, and a Home-eNB group 203-2 with a plurality of Home-eNBs 206. A system formed of an evolved packet core (EPC) as a core network and the E-UTRAN 201 as a radio access network is called an evolved packet system (EPS). The EPC as a core network and the E-UTRAN 201 as a radio access network may be called a "network" collectively.

The eNB 207 is connected through an S1 interface to an MME/S-GW unit (hereinafter may be called an "MME unit") 204 including a mobility management entity (MME), a serving gateway (S-GW), or the MME and the S-GW to communicate control information between the eNB 207 and the MME unit 204. A plurality of MME units 204 may be connected to one eNB 207. The eNBs 207 are connected to each other through an X2 interface to communicate information between the eNBs 207.

The Home-eNB 206 is connected to the MME unit 204 through the S1 interface to communicate control information between the Home-eNB 206 and the MME unit 204. A plurality of Home-eNBs 206 is connected to one MME unit 204. Alternatively, the Home-eNB 206 is connected to the MME unit 204 through a Home-eNB gateway (HeNBGW) 205. The Home-eNB 206 and the HeNBGW 205 are connected through the S1 interface. The HeNBGW 205 and the MME unit 204 are connected through the S1 interface.

One or a plurality of Home-eNBs 206 is connected to one HeNBGW 205 to communicate information therebetween through the S1 interface. The HeNBGW 205 is connected to one or a plurality of MME units 204 to communicate information therebetween through the S1 interface.

The MME unit 204 and the HeNBGW 205 are higher devices, more specifically, higher nodes. The MME unit 204 and the HeNBGW 205 control connection between the eNB 207 and the Home-eNB 206 as base stations and the mobile terminal (UE) 202. The MME unit 204 forms the EPC as a core network. The base station 203 and the HeNBGW 205 form the E-UTRAN 201.

The following configuration has also been examined by the 3GPP. The X2 interface between the Home-eNBs 206 is supported. Specifically, the Home-eNBs 206 are connected to each other through the X2 interface to communicate control information between the Home-eNBs 206. If viewed from the MME unit 204, the HeNBGW 205 is regarded as the Home-eNB 206. If viewed from the Home-eNB 206, the HeNBGW 205 is regarded as the MME unit 204.

In both the case where the Home-eNB 206 is connected to the MME unit 204 through the HeNBGW 205 and the case where the Home-eNB 206 is connected to the MME unit 204 directly, the same interface, specifically, the S1 interface is used between the Home-eNB 206 and the MME unit 204.

The base station 203 may form one cell or a plurality of cells. Each cell has a predetermined range as a coverage in which the cell is allowed to communicate with the mobile terminal 202. Each cell makes radio communication with the mobile terminal 202 within the coverage. If one base station 203 forms a plurality of cells, these cells are configured to be allowed to communicate with the mobile terminal 202 one by one.

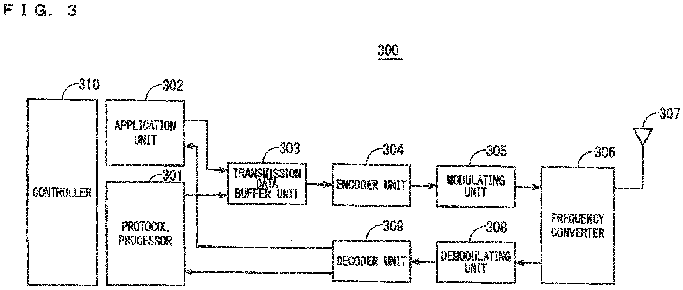

FIG. 3 is a block diagram showing the configuration of the mobile terminal 202 illustrated in FIG. 2 as a communication terminal according to this embodiment. The following describes transmission process executed by the mobile terminal 202 illustrated in FIG. 3.

First, control data from a protocol processor 301 and user data from an application unit 302 are stored into a transmission data buffer unit 303. The data stored in the transmission data buffer unit 303 is transferred to an encoder unit 304. Then, the encoder unit 304 executes encoding process such as error correction on the transferred data. In some cases, the data may be output from the transmission data buffer unit 303 directly to a modulating unit 305 without being subjected to the encoding process. The data encoded by the encoder unit 304 is modulated by the modulating unit 305. The modulated data is converted to a baseband signal. Then, the converted signal is output to a frequency converter 306 and is converted to a radio transmission frequency. The transmission signal is thereafter transmitted from an antenna 307 to the base station 203.

The mobile terminal 202 executes reception process as follows. A radio signal from the base station 203 is received through the antenna 307. The received signal is converted from a radio reception frequency signal to a baseband signal by the frequency converter 306. The converted signal is demodulated by a demodulating unit 308. The demodulated data is transferred to a decoder unit 309. Then, the decoder unit 309 executes decoding process such as error correction on the transferred data. The decoded data includes control data and user data. The control data is transferred to the protocol processor 301. The user data is transferred to the application unit 302.

A series of the processes by the mobile terminal 202 is controlled by a controller 310. To achieve this, while not shown in FIG. 3, the controller 310 is connected to each of the other functional units illustrated in FIG. 3.

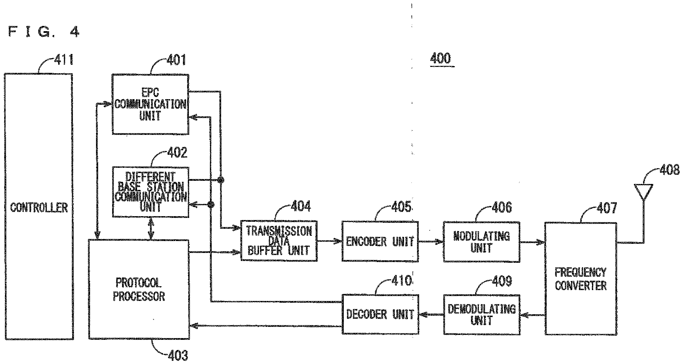

FIG. 4 is a block diagram showing the configuration of the base station 203 illustrated in FIG. 2 as a base station according to this embodiment. The following describes transmission process executed by the base station 203 illustrated in FIG. 4.

An EPC communication unit 401 is for transmission and reception of data between the base station 203 and an EPC (such as the MME unit 204), or between the base station 203 and the HeNBGW 205, for example. A different base station communication unit 402 is for transmission and reception of data to and from a different base station. Each of the EPC communication unit 401 and the different base station communication unit 402 is for transfer of information to and from a protocol processor 403. Control data from the protocol processor 403, and user data and control data from the EPC communication unit 401 and the different base station communication unit 402 are stored into a transmission data buffer unit 404.

The data stored in the transmission data buffer unit 404 is transferred to an encoder unit 405. Then, the encoder unit 405 executes encoding process such as error correction on the transferred data. In some cases, the data may be output from the transmission data buffer unit 404 directly to a modulating unit 406 without being subjected to the encoding process. The encoded data is modulated by the modulating unit 406. The modulated data is converted to a baseband signal. Then, the converted signal is output to a frequency converter 407 and is converted to a radio transmission frequency. The transmission signal is thereafter transmitted from an antenna 408 to one or a plurality of mobile terminals 202.

The base station 203 executes reception process as follows. A radio signal from one mobile terminal 202 or radio signals from a plurality of mobile terminals 202 are received through the antenna 408. The received signal is converted from a radio reception frequency signal to a baseband signal by the frequency converter 407. The converted signal is demodulated by a demodulating unit 409. The demodulated data is transferred to a decoder unit 410.

Then, the decoder unit 410 executes decoding process such as error correction on the transferred data. The decoded data includes control data and user data. The control data is transferred to the protocol processor 403, the EPC communication unit 401, or the different base station communication unit 402. The user data is transferred to the EP communication unit 401 and the different base station communication unit 402.

A series of the processes by the base station 203 is controlled by a controller 411. To achieve this, while not shown in FIG. 4, the controller 411 is connected to each of the other functional units illustrated in FIG. 4.

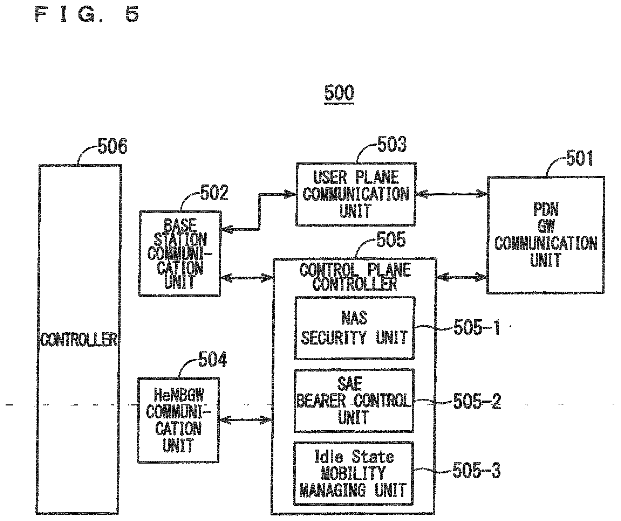

FIG. 5 is a block diagram showing the configuration of the MME according to this embodiment. FIG. 5 shows the configuration of an MME (204a) in the MME unit 204 illustrated in FIG. 2 referred to above.

A PDN GW communication unit 501 is for transmission and reception of data between the MME 204a and a PDN GW. A base station communication unit 502 is for transmission and reception of data through the S1 interface between the MME 204a and the base station 203.

If data received from the PDN GW is user data, the user data is transferred from the PDN GW communication unit 501 to a base station communication unit 502 through a user plane communication unit 503. Then, the transferred data is transmitted to one or a plurality of base stations 203.

If data received from the base station 203 is user data, the user data is transferred from the base station communication unit 502 to the PDN GW communication unit 501 through the user plane communication unit 503. Then, the transferred data is transmitted to the PDN GW.

If data received from the PDN GW is control data, the control data is transferred from the PDN GW communication unit 501 to a control plane controller 505. If data received from the base station 203 is control data, the control data is transferred from the base station communication unit 502 to the control plane controller 505.

An HeNBGW communication unit 504 is provided in the presence of the HeNBGW 205. The HeNBGW communication unit 504 is for transmission and reception of data through an interface (IF) between the MME 204a and the HeNBGW 205 in a manner that depends on the type of information. Control data received from the HeNBGW communication unit 504 is transferred from the HeNBGW communication unit 504 to the control plane controller 505.

A result of process by the control plane controller 505 is transmitted through the PDN GW communication unit 501 to the PDN GW. The result of the process by the control plane controller 505 is also transmitted to one or a plurality of base stations 203 through the base station communication unit 502 using the S1 interface, and to one or a plurality of HeNBGWs 205 through the HeNBGW communication unit 504.

The control plane controller 505 includes an NAS security unit 505-1, an SAE bearer control unit 505-2, an idle state mobility managing unit 505-3, etc. The control plane controller 505 controls overall process on control plane.

The NAS security unit 505-1 is for security of a non-access stratum (NAS) message, etc. The SAE bearer control unit 505-2 is for management of a bearer of a system architecture evolution (SAE), etc. The idle state mobility managing unit 505-3 is for management of the mobility of an idle state (LTE-IDLE state or also simply called an idle), generation and control of a paging signal in an idle state, addition, deletion, update, and search of a tracking area of one or a plurality of mobile terminals 202 under control, management of a tracking area list, etc.

The MME 204a distributes a paging signal to one or a plurality of base stations 203. The MME 204a also exerts mobility control in an idle state. If a mobile terminal is in an idle state and in an active state, the MME 204a manages a list of tracking areas. The MME 204a starts dealing with a paging protocol by transmitting a paging message to a cell belonging to a tracking area with which UE is registered. Management of a CSG of the Home-eNB 206 connected to the MME 204a, management of a CSG-ID, and management of a whitelist may be done by the idle state mobility managing unit 505-3.

A series of the processes by the MME unit 204a is controlled by a controller 506. To achieve this, while not shown in FIG. 5, the controller 506 is connected to each of the other functional units illustrated in FIG. 4.

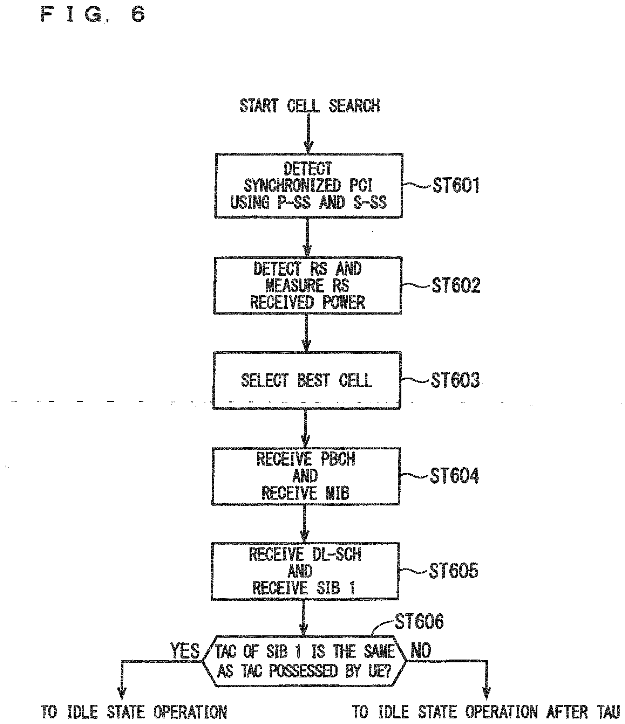

An example of a cell search method implemented in the communication system will be described next. FIG. 6 is a flowchart briefly illustrating a flow from a cell search to idle state operation by a communication terminal (UE) in the LTE communication system. If the communication terminal starts the cell search, the communication terminal synchronizes slot timing and frame timing using a primary synchronization signal (P-SS) and a secondary synchronization signal (S-SS) in Step ST601 transmitted from a peripheral base station.

The P-SS and the S-SS are collectively called a synchronization signal (SS). A synchronization code having one-to-one correspondence to a PCI assigned to each cell is assigned to the synchronization signal (SS). Using 504 types of PCIs has been examined. Synchronization is established using the 504 PCIs and the PCI of a synchronized cell is detected (specified).

Next, in Step ST602, a cell-specific reference signal (CRS) as a reference signal (RS) transmitted from a base station to each cell is detected for the synchronized cell and the reference signal received power (PSRP) of the RS is measured. A code having one-to-one correspondence to a PCI is used for the reference signal (RS). By making correlation using the code, the synchronized cell can be separated from a different cell. An RS code for the correlated cell is derived based on the PCI specified in Step ST601 to detect the RS. In this way, the received power of the RS can be measured.

Next, in Step ST603, a cell of the best RS reception quality, for example, a cell of the highest RS received power, specifically, a best cell is selected from one or more cells having been selected until the end of Step ST602.

Next, in Step ST604, the PBHC of the best cell is received to acquire a BCCH as broadcast information. A master information block (MIB) containing cell configuration information is mapped to the BCCH over a PBCH. In this way, the MIB is acquired by acquiring the BCCH through reception of the PBCH. Examples of the MIB information include a downlink (DL) system bandwidth (also called a transmission bandwidth configuration (dl-bandwidth)), the number of transmission antennas, and a system frame number (SFN).

Next, in Step ST605, the DL-SCH of the selected cell is received based on cell configuration information about the MIB, thereby acquiring a system information block (SIB) 1 in the broadcast information BCCH. The SIB 1 contains information about access to this cell, information about cell selection, and scheduling information about a different SIB (SIBk, where k is an integer of 2 or more). The SIB 1 further contains a tracking area code (TAC).

Next, in Step ST606, the communication terminal compares the TAC of the SIB1 received in Step ST605 and a TAC part of a tracking area identity (TAI) in a tracking area list already possessed by the communication terminal. The tracking area list is also called a TAI list. The TAI is identification information for identification of a tracking area, and is formed of a mobile country code (MCC), a mobile network code (MNC), and a tracking area code (TAC). The MCC is a country code. The MNC is a network code. The TAC is a code number of a tracking area.

If the TAC received in Step ST605 is determined to be the same as the TAC in the tacking area list as a result of the comparison in Step ST606, the communication terminal proceeds to idle state operation in the corresponding cell. If the TAC received in Step ST605 is determined not to be in the tacking area list as a result of the comparison, the communication terminal requests a core network (EPC) containing the MME, etc. through this cell to change a tracking area for tracking area update (TAU).

Based on the identification number (UE-ID) of the communication terminal transmitted from the communication terminal together with a TAU request signal, a device forming the core network (hereinafter may be called a "device belonging to the core network") updates the tracking area list. The device belonging to the core network transmits an updated tracking area list to the communication terminal. Based on the received tracking area list, the communication terminal rewrites (updates) a TAC list possessed by the communication terminal. Then, the communication terminal proceeds to idle state operation in the corresponding cell.

As smartphones and table terminals have become popular, the amount of traffic through cellular-system radio communication has been increased explosively. Hence, shortage of radio resources has been a concern all over the world. To increase efficiency of frequency usage in response to such a concern, reducing a cell size and proceeding further with spatial separation has been examined.

According to a conventional cell configuration, a cell formed of an eNB has a coverage of a relatively wide range. The conventional cell configuration is such that a plurality of cells formed of a plurality of eNBs has a coverage of a relatively wide range to cover a certain area.

If the size of a cell is reduced, the cell formed of an eNB has a coverage of a narrower range than the coverage of a cell formed of a conventional eNB. This means that, to achieve the conventional coverage for the certain area, eNBs of smaller cell sizes of a larger number than conventional eNBs are required.

In the following description, a cell having a relatively wide coverage like a cell formed of a conventional eNB is called a "macro cell," and an eNB forming the macro cell is called a "macro eNB." Further, a cell having a relatively narrow coverage like a cell of a reduced size is called a "small cell," and an eNB forming the small cell is called a "small eNB."

The macro eNB can be the "wide area base station" described in Non-Patent Document 7, for example.

The small eNB can be a low power node, a local area node, or a hot spot, for example. The small eNB can also be a pico eNB forming a pico cell, a femto eNB forming a femtocell, an HeNB, a remote area head (RRH), a remote radio unit (RRU), remote radio equipment (RRE), or a relay node (RN). The small eNB can also be the "local area base station" or the "home base station" described in Non-Patent Document 7.

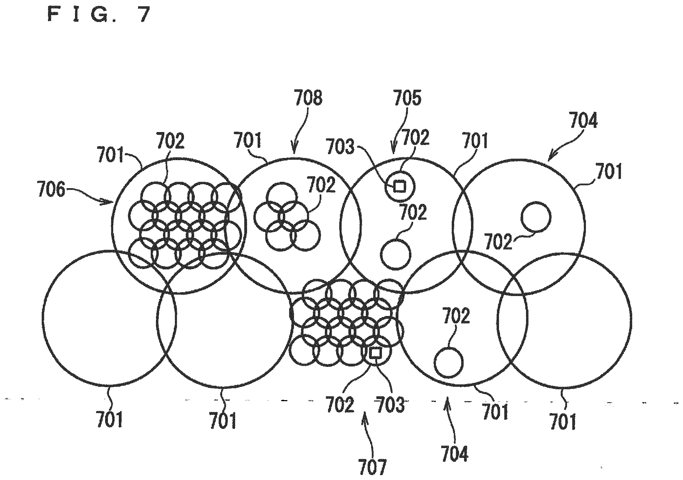

FIG. 7 illustrates the concept of a cell configuration in which the macro eNB and the small eNB are mixed. The macro cell formed of the macro eNB has a coverage 701 of a relatively wide range. The small cell formed of the small eNB has a coverage 702 of a relatively narrower range than the coverage 701 of the macro eNB (macro cell).

In the case of mixture of a plurality of eNBs, the coverage of a cell formed of one eNB may be contained in the coverage of a cell formed of a different eNB. In the cell configuration illustrated in FIG. 7, as shown as a coverage 704 or a coverage 705, the coverage 702 of the small cell formed of the small eNB may be contained in the coverage 701 of the macro cell formed of the macro eNB.

As shown as the coverage 705, the coverages 702 of a plurality of small cells, for example, two small cells may be contained in the coverage 701 of one macro cell. A mobile terminal 703 is contained in the coverage 702 of the small cell, for example, and makes communication through the small cell.

In the cell configuration illustrated in FIG. 7, as shown as a coverage 706, two or more overlaps may be generated between the coverages 701 of the macro cells formed of the macro eNBs and the coverages 702 of the small cells formed of the small eNBs.

As shown as a coverage 707, an overlap may not be generated between the coverage 701 of the macro cell formed of the macro eNB and the coverage 702 of the small cell formed of the small eNB.

As shown as a coverage 708, the coverages 702 of a large number of small cells formed of a large number of small eNBs may be contained in the coverage 701 of one macro cell formed of one macro eNB.

An OFDM/OFDMA modulation system, an SC-FDMA system, or a modulation system using comparable FFT (DFT-SOFDM, for example) employs the following methods as a method of forming a GI: a method of inserting a CP between OFDM symbols subjected to inverse fast Fourier transform (IFFT) (this method is employed in LTE according to 3GPP); and a method of providing a non-transmission interval.

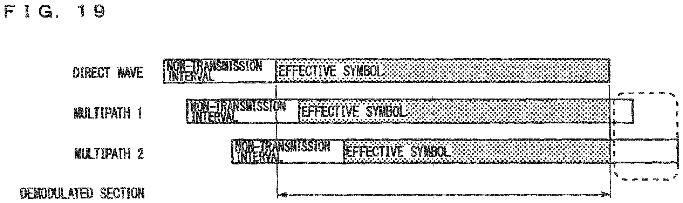

FIG. 19 illustrates the characteristics of a non-transmission interval and those of a CP. As illustrated in FIG. 19, according to the method of providing the non-transmission interval, a demodulated section has an interval (an interval surrounded by a dotted line in FIG. 19) not to be used effectively caused by increase in delay of a symbol resulting from a multipath propagation channel to disadvantageously cause energy loss. Hence, power efficiency and efficiency of frequency usage are reduced.

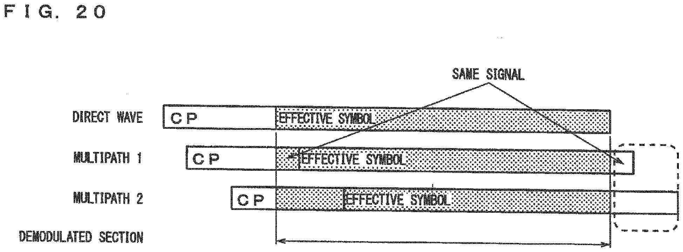

FIG. 20 illustrates the characteristics of a non-transmission interval and those of a CP. As illustrated in FIG. 20, according to the method of inserting the CP, a demodulated section does not have a non-transmission interval to cause no energy loss. Meanwhile, the absence of a non-signal interval necessitates analog control such as phase or amplitude control to be exerted during radio signal transmission.

Hence, disturbance of a waveform may be caused on a temporal axis. In this case, an unwanted component is generated on a frequency axis and this unwanted component becomes an interfering wave with a different radio system. If a multi-element antenna considered to be promising by the fifth generation is used, for example, changing directivity during transmission of a CP results in transmission of an interfering wave.

This embodiment is to provide the configuration a radio communication frame achieving switching of analog control such as phase or amplitude control, for example, achieving switching of beam directivity using a multi-element antenna, while suppressing reduction in power efficiency at a base station caused by delay increase resulting from a multipath propagation channel.

An LTE system currently operated employs a method of inserting a CP as a method of realizing a guard interval (GI).

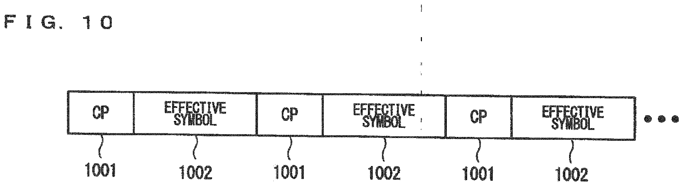

FIG. 10 illustrates the configuration of a radio communication frame in an LTE system. The configuration of the radio communication frame in the LET system will be described below by referring to FIG. 10.

A CP insertion section 1001 is inserted into each effective symbol 1002. A CP is a copy from the end of the effective symbol 1002. As illustrated by the CP insertion section 1001, the CP is inserted into the head of the effective symbol 1002. Inserting the CP makes it possible to reduce the influence of intersymbol interference occurring in a multipath propagation environment.

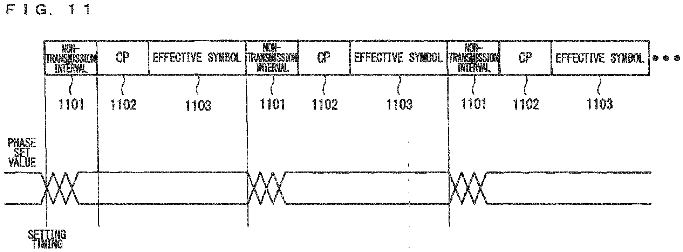

FIG. 11 illustrates an exemplary method of forming a GI according to this embodiment. The configuration of a radio communication frame according to this embodiment will be described below by referring to FIG. 11. Each radio communication frame is formed of a non-transmission interval 1101, a CP 1102, and an effective symbol 1103.

In this configuration of the radio communication frame, a GI is formed by inserting the non-transmission interval 1101 before the CP 1102. The non-transmission interval 1101 is an interval where a radio signal is not to be transmitted. This interval allows switching of analog control such as phase or amplitude control, for example, change in control value of a phase shifter, change in control value of an amplifier, change in the value of transmission power of the phase shifter, change in the value of transmission power of the amplifier, switching of frequency characteristics for digital pre-distortion (DPD) distortion compensation, change in parameter for correction of amplitude-phase characteristics, or frequency switching.

Making switching of analog control such as phase or amplitude control in the non-transmission interval 1101 makes it possible to prevent the occurrence of an unwanted wave due to transient response caused by switching of analog control such as phase or amplitude control.

As a result of insertion of the CP 1102 in this configuration of the radio communication frame, transmission with suppressed energy loss can also be realized even in a multipath propagation environment.

The temporal length of the non-transmission interval 1101 can be set at a value specific to a device in association with the speed of transient response by an analog configuration of a transceiver at a local station. Specifically, the temporal length of the non-transmission interval 1101 can be set in such a manner that an interval made unstable by transient response corresponds to the non-transmission interval 1101, and that stable response is achieved in a subsequent interval of the CP 1102.

The value of this temporal length may be set by referring to values accumulated in a nonvolatile memory, for example. Alternatively, a value designated by a counterpart station may be employed. Still alternatively, a value designated by operations, administration, and maintenance (OAM) may be employed.

The temporal length of the non-transmission interval 1101 can be set at a value specific to a device in association with the speed of transient response by an analog configuration of a transceiver at a counterpart station. Specifically, the temporal length of the non-transmission interval 1101 can be set in such a manner that an interval made unstable by transient response corresponds to the non-transmission interval 1101, and that stable response is achieved in a subsequent interval of the CP 1102.

The value of this temporal length may be set by referring to values accumulated in a nonvolatile memory, for example. Alternatively, a value designated by the counterpart station may be employed. Still alternatively, a value designated by operations, administration, and maintenance (OAM) may be employed.

If there is a plurality of counterpart stations, the temporal length can generally have a dedicated value. Alternatively, a maximum among values in the counterpart stations may be employed. By employing the maximum among the values in the counterpart stations, interference cancellers can be timed to operate simultaneously for a high-accuracy canceling of removing different communication, thereby facilitating processing.

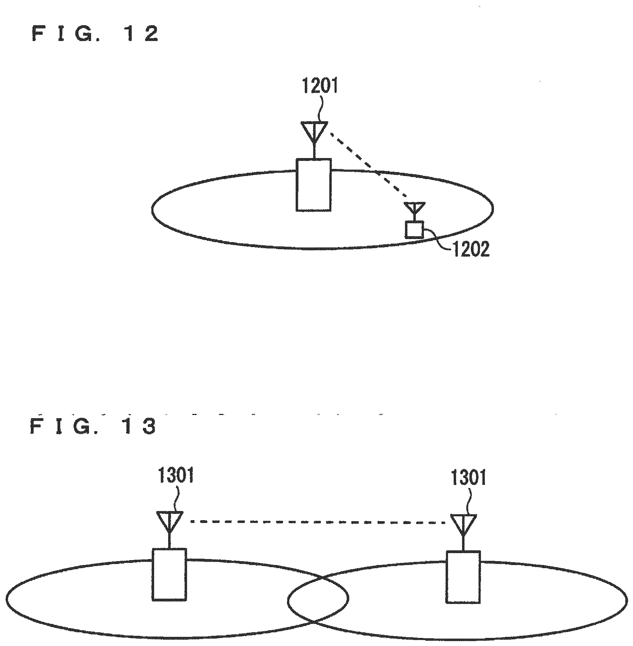

The temporal length of the CP 1102 may be set based on a cell radius or the characteristics of a radio propagation channel. Specifically, the temporal length of the CP 1102 may be set to be greater with a greater cell radius or with a greater length of the radio propagation channel. Alternatively, as illustrated in FIG. 12, an antenna device 1202 for measurement of a radio propagation channel may be prepared.

A known signal may be transmitted from a base station 1201 and the antenna device 1202 for measurement of a radio propagation channel may receive the transmitted signal. Then, the received signal may be analyzed and the temporal length of the CP 1102 may be set based on a result of the analysis. FIG. 12 illustrates an example of propagation characteristics analysis according to this embodiment.

Alternatively, the temporal length of the CP 1102 may be determined by making a base station select a mobile terminal existing in a cell and analyzing propagation channel characteristics using the selected mobile terminal. The mobile terminal to be selected by the base station may be in an IDLE state (without an RRC connection).

Alternatively, a mobile terminal in a discontinuous reception state may be selected. In this way, propagation channel characteristics can be measured without increasing a processing load during communication. Propagation channel characteristics may be measured with a high degree of accuracy in a short measurement cycle by selecting a mobile terminal in the process of making communication.

A method of setting the temporal length of the CP 1102 using a mobile terminal may be realized by transmitting a known signal to a mobile terminal selected by a base station, making the mobile terminal analyze the received signal in terms of propagation channel characteristics, and reporting a result of the analysis to the base station.

Alternatively, the temporal length of the CP 1102 may be set by transmitting a known signal from the selected mobile terminal to the base station, and making the base station analyze the received signal in terms of propagation channel characteristics.

Alternatively, the temporal length of the CP 1102 may be determined through analysis conducted only by a base station. In this case, the temporal length of the CP 1102 may be determined by making a local base station receive a signal transmitted from the local base station and then reflected on a reflector, and making the local base station analyze the received signal in terms of propagation characteristics.

Still alternatively, as illustrated in FIG. 13, the temporal length of the CP 1102 may be determined by making adjacent cell base stations 1301 transmit or receive a known signal therebetween, and analyzing the received signal in terms of propagation channel characteristics. FIG. 13 illustrates an example of propagation characteristics analysis according to this embodiment.

Alternatively, the temporal length of the CP 1102 may be set based on transmission power. A multipath for reflection and propagation generally extends further with increase in transmission power. The further extension is handled effectively by increasing the temporal length of a CP. For this reason, the temporal length of the CP 1102 may be set based on transmission power of a base station. Alternatively, the temporal length of the CP 1102 may be set based on information about maximum transmission power of a mobile terminal (UE capability information).

To analyze propagation channel characteristics with a higher degree of accuracy, propagation channel measurement may be conducted in a gap interval as an interval of switching between transmission and reception in a time division duplex (TDD) system. In this interval, a base station and a mobile terminal stop transmitting and receiving a signal so no signal to become noise occurs. Alternatively, a device other than a device used for analysis on a propagation channel may be scheduled to stop making communication. Further, to increase a relative power ratio to noise power, the transmission power of a known signal may be increased.

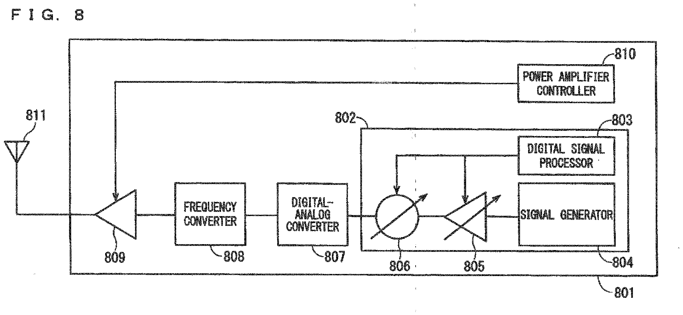

FIG. 8 illustrates the configuration of a transmitter (base station) formed by applying this embodiment to a multi-element antenna employing a digital phase switching system.

A transmitter 801 includes a digital signal processor 802, a digital-analog converter 807, a frequency converter 808, a power amplifier 809, and a power amplifier controller 810.

The digital signal processor 802 includes a signal generator 804, a digital signal processor controller 803, a power adjuster 805, and a phase adjuster 806.

A signal generated by the signal generator 804 is adjusted in power by the power adjuster 805. Then, the adjusted signal is controlled in phase by the phase adjuster 806 to have an intended phase and an intended amplitude.

The power adjuster 805 and the phase adjuster 806 are subjected to timing control by the digital signal processor controller 803 in such a manner that transient response by an analog circuit is finished in a non-transmission interval. This timing control may be started to coincide with timing of start of the non-transmission interval or started slightly before the non-transmission interval in consideration of control delay.

A digital signal generated by the digital signal processor 802 is converted to an analog signal by the digital-analog converter, and then converted in frequency to a carrier wave frequency by the frequency converter 808. The signal converted to the operating frequency is amplified to arbitrary transmission power by the power amplifier 809. The power amplifier controller 810 controls powering on and off of the power amplifier 809. The signal amplified to the transmission power is emitted to radio space through a transmission antenna 811.

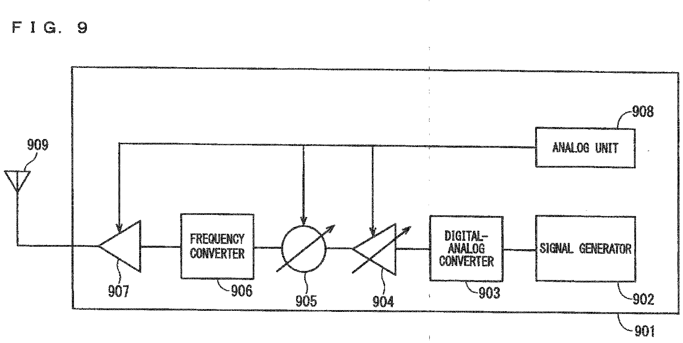

FIG. 9 illustrates the configuration of a transmitter (base station) formed by applying this embodiment to a multi-element antenna employing an analog phase switching system.

A transmitter 901 includes a signal generator 902, a digital-analog converter 903, a power adjuster 904, a phase adjuster 905, a frequency converter 906, a power amplifier 907, and an analog controller 908.

A signal generated by the signal generator 902 is converted to an analog signal by the digital-analog converter 903, and adjusted in power by the power adjuster 904. Then, the adjusted signal is controlled in phase by the phase adjuster 905. The controlled signal is thereafter converted in frequency to an operating frequency by the frequency converter 906 and amplified to arbitrary transmission power by the power amplifier 907. Then, the amplified signal is emitted to radio space through a transmission antenna 909.

The analog controller 908 exerts timing control in such a manner that transient response by an analog circuit is finished in a non-transmission interval. This timing control may be started to coincide with timing of start of the non-transmission interval or started slightly before the non-transmission interval in consideration of control delay.

If transient response differs between the power adjuster 904, the phase adjuster 905, or the power amplifier 907, for example, establishing timing of control over these units in different ways in consideration of the characteristics of these units is effective in preventing an interfering wave. For example, if the power amplifier is switched from ON to OFF, the power amplifier does not become off completely for the presence of a capacitive component. Hence, changing a phase setting simultaneously with this switching causes an unwanted wave. This may be prevented effectively by changing a phase set value after a lapse of a significant period of time after the switching off.

A non-transmission interval may be generated by a method of powering off the power amplifier using the power amplifier controller 810 in FIG. 8 and using the analog controller 908 in FIG. 9. This achieves reduction in a current (idle current) to be consumed by the power amplifier 809 in a non-transmission interval to allow improvement in power efficiency.

A signal waveform may be generated while an amplitude in a non-transmission interval is set at zero. This makes it possible to generate a non-transmission interval while the power of the power amplifier is always set at ON without caring time of power ON/Off switching of the power amplifier required to be done at a high speed in response to an extremely short non-transmission interval, for example.

The description given above by referring to FIGS. 8 and 9 is intended for transient response by an analog circuit part and the effectiveness of providing a non-transmission interval in responses to the transient response. Meanwhile, in some cases of digital control such as control over a digital filter, for example, it also takes time from a moment after switching to the finish of control. In such cases, a period of time corresponding to the period of transient response is desirably used as a non-transmission interval. In the case of an FIR filter to generate impulse response by forming 100 taps, for example, a residual signal is known to last a period corresponding to the period of a half of the 100 taps, specifically, 50 taps, even if there is no input signal.

### Second Embodiment

A radio communication system, a base station, and a radio communication method according to this embodiment will be described below. In the below, a structure comparable to that of the above-described embodiment is identified by the same sign and illustrated in the drawings with the same sign. If appropriate, the detailed description of such a structure will be omitted.

### Configuration

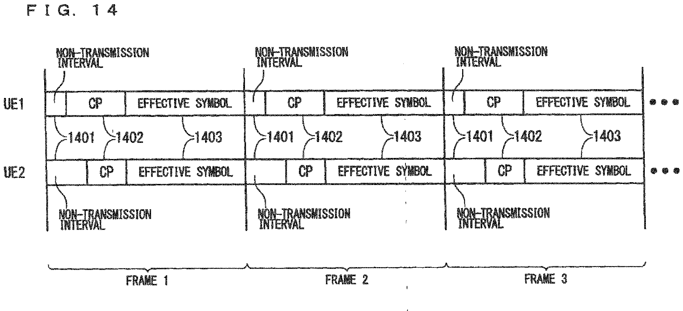

In this embodiment, the sum of the temporal length of a non-transmission interval and the temporal length of a CP has a constant value. FIG. 14 illustrates a frame format in each communication terminal (UE) according to this embodiment.

As illustrated in FIG. 14, each radio communication frame is formed of a non-transmission interval 1401, a CP 1402, and an effective symbol 1403. Each of the temporal length of the non-transmission interval 1401 and the temporal length of the CP 1402 differs between communication terminals (UEs). The sum of the temporal length of the non-transmission interval 1401 and the temporal length of the CP 1402 is constant in all the communication terminals (UEs). Specifically, lengths each determined by adding the temporal length of the non-transmission interval 1401 and the temporal length of the CP 1402 are equal in UE1 and UE2.

This configuration achieves commonality of a radio communication frame. Thus, control over an L2 such as retransmission of HARQ can be executed in common without dependence on UE, thereby simplifying the L2 process at a base station.

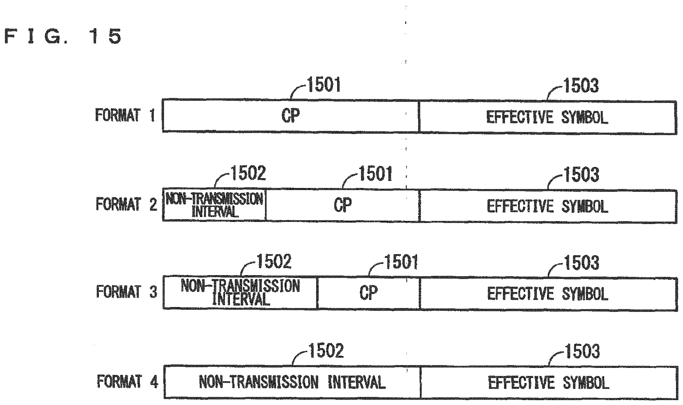

FIG. 15 illustrates a list of frame formats each including a combination of the temporal length of a non-transmission interval 1502 and the temporal length of a CP 1501. An effective symbol 1503 has a constant temporal length. Further, lengths each determined by adding the temporal length of the non-transmission interval 1502, the temporal length of the CP 1501, and the temporal length of the effective symbol 1503 (the temporal length of a radio communication frame formed of a plurality of symbols) are equal in all the formats.

As a result of the equality in the temporal length between radio communication frames, an MAC scheduler for an L2 at a base station to process formats of multiple patterns simultaneously is allowed to determine the quantities, modulation systems, or other things of data to be transmitted in the same cycle to all counterpart base stations, for example. Further, formats can be changed in the same control cycle. In this way, process can be simplified.

The temporal length of the non-transmission interval 1502 and the temporal length of the CP 1501 may be set by selecting one from the frame formats in the above-described list. For this setting, at least one frame format containing both the non-transmission interval 1502 and the CP 1501 should be selected. Preparing the list of the combinations each including the temporal length of the non-transmission interval 1502 and the temporal length of the CP 1501 achieves reduction in the amount of information required for setting the temporal length of the non-transmission interval 1502 and the temporal length of the CP 1501.

Information about the set temporal length of the non-transmission interval 1502 and the set temporal length of the CP 1501, or information about a format number in the frame format list may be added to broadcast information (MIB or SIB), and then notified to a mobile terminal.

In the case of a base station having the capability to change beam directivity at a high speed like a base station having a digital phase shifter, only a non-transmission interval for switching of transmission power may be necessary. This achieves reduction in a non-transmission interval. In the case of a base station allowed only to execute beam directivity control at a relatively low speed such as a base station that executes beam control using an analog phase shifter, preparing a long non-transmission interval is effective.

For example, a base station having the capability to switch beam directivity at a high speed is used effectively in broadcasting capability information using broadcast information (MIB or SIB). In this case, a communication terminal (UE) is used effectively in conducting demodulation in response to the broadcast information.

The foregoing also applies to a mobile machine. In this case, instead of the broadcast information at the base station, information about a speed usable for changing beam directivity is added to UE capability information.

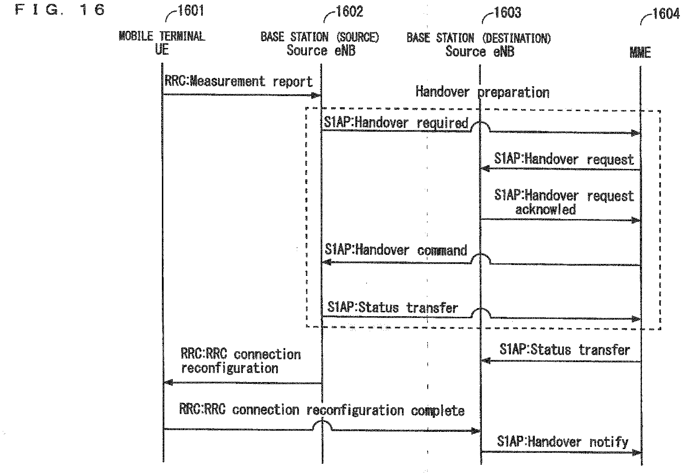

FIG. 16 illustrates a handover procedure taken by LTE. For handover by a mobile terminal 1601, information about the temporal length of a non-transmission interval in a frame format of a base station 1603 as a handover destination, or information about a frame format number corresponding to this temporal length, may be added to a handover command message to be transmitted from an MME 1604 to a base station 1602 as a handover source and to an RRC connection reconfiguration message to be transmitted from the base station 1602 as a handover source to the mobile terminal 1601.

Information about the temporal length of a longer non-transmission interval, or information about a frame format number corresponding to this temporal length, may be added to the frame format of the base station 1603 as a handover destination and a frame format of the base station 1602 as a handover source.

Likewise, the mobile terminal 1601 may add information about a speed allowing beam directivity switching to RRC connection reconfiguration complete, instead of the RRC connection reconfiguration at the base station.

Selecting a frame format having a longer non-transmission interval from a frame format at a base station as a handover source and a frame format at a base station as a handover destination and making communication using the selected frame format is effective for execution of the handover by the mobile terminal 1601.

In this case, based on the information about a speed allowing beam directivity switching notified from the mobile terminal 1601, the temporal length of an uplink CP, a CP cycle, a CP offset (CP start symbol), the temporal length of a non-transmission interval, a non-transmission cycle, and a non-transmission interval offset (non-transmission interval start symbol) may be set at the base station 1603 as a handover destination.

A list of frame formats each including a combination of the temporal length of a non-transmission interval and the temporal length of a CP may be prepared. An optimum frame format may be selected from the list and employed. A frame format may be selected from the list by the method of selecting a frame format that satisfies the temporal length of a required non-transmission interval and the temporal length of a required CP based on information about time allowing beam directivity switching notified from the mobile terminal 1601 and propagation characteristics in a corresponding cell.

If there is no frame format that satisfies both the temporal length of the required non-transmission interval and the temporal length of the required CP, a frame format satisfying the temporal length of the required non-transmission interval may be selected. This acts as a measure to prevent interference by an unwanted signal component caused by transmission of a radio signal during beam directivity switching with a different system.

Information about the set temporal length of an uplink non-transmission interval and the set temporal length of an uplink CP may be added to broadcast information (MIB or SIB), and then notified to a mobile terminal.

In the example described above, the sum of the temporal length of a non-transmission interval and the temporal length of a CP is constant. The procedure of setting these lengths can also be employed in the first embodiment.

### Third Embodiment

A radio communication system, a base station, and a radio communication method according to this embodiment will be described below. In the below, a structure comparable to that of the above-described embodiments is identified by the same sign and illustrated in the drawings with the same sign. If appropriate, the detailed description of such a structure will be omitted.

### Configuration

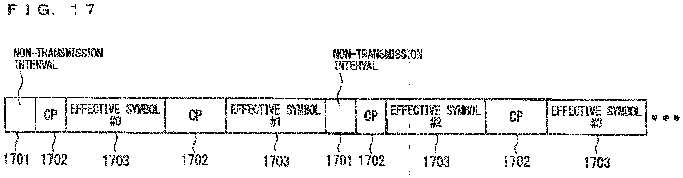

FIG. 17 illustrates an exemplary method of forming a GI according to this embodiment. The configuration of a radio communication frame according to this embodiment will be described by referring to FIG. 17. Each radio communication frame is formed of a non-transmission interval 1701, a CP 1702, and an effective symbol 1703.

The configuration of the radio communication frame illustrated in FIG. 17 is employed in communication systems such as OFDM, OFDMA, SCFDMA, and DFT-SOFDM where a non-transmission interval is inserted in a different cycle from a cycle of inserting a CP. The temporal length of a GI, specifically, a temporal length determined by adding the temporal length of the non-transmission interval 1701 and the temporal length of the CP 1702 is constant. In the effective symbol 1703 without the non-transmission interval 1701, the temporal length of the CP 1702 is set longer.

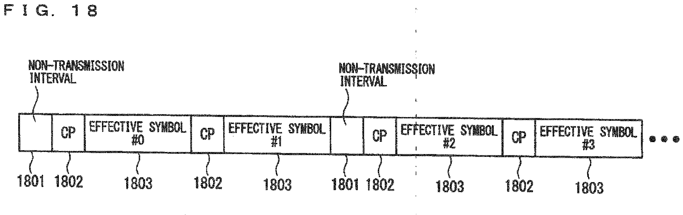

FIG. 18 illustrates an exemplary method of forming a GI employed if the temporal length of the GI (the temporal length of a CP) is shortened to conform to timing of not implementing beam directivity switching. The configuration of a radio communication frame according to this embodiment will be described below by referring to FIG. 18. Each radio communication frame is formed of a non-transmission interval 1801, a CP 1802, and an effective symbol 1803.

In the case illustrated in FIG. 18, a non-transmission interval can be shortened to achieve increase in efficiency of frequency usage.

A cycle of inserting a non-transmission interval may be set in a manner that depends on a frequency of changing beam directivity. For example, a cycle of inserting a non-transmission interval may be an integer multiple of a cycle of inserting a CP. Alternatively, non-transmission intervals may be inserted in two intervals of one subframe (in an effective symbol #0 and an effective symbol #2 of FIG. 17, for example).

The capability of a base station about a beam directivity switching cycle may be broadcast as capability information to a mobile terminal using broadcast information (MIB or SIB).

Information about the set CP cycle, CP offset (CP start symbol), non-transmission interval cycle, and non-transmission interval offset (non-transmission interval start symbol) may be added to broadcast information (MIB or SIB), and then notified to a mobile terminal. An insertion cycle may be changed by signaling.

This embodiment works effectively if a mobile terminal is capable of determining the head of a symbol. For example, the mobile terminal may determine a symbol containing a physical broadcast channel (PBCH) as a head symbol in a radio communication frame. Being capable of determining the head symbol makes it possible to identify a non-transmission interval in given information about a cycle of inserting a non-transmission interval.

For handover by a mobile terminal, information about a cycle of inserting a non-transmission interval at a base station as a handover destination may be added to a handover command message to be transmitted from an MME to a base station as a handover source and to an RRC connection reconfiguration message to be transmitted from the base station as a handover source to the mobile terminal. Further, information about a longer one of the cycle of inserting a non-transmission interval at the base station as a handover destination and a cycle of inserting a non-transmission interval at the base station as a handover source may be added.

Likewise, the mobile terminal may add information about a beam directivity switching cycle to RRC connection reconfiguration complete, instead of RRC connection reconfiguration at the base station.

For execution of the handover by the mobile terminal, the mobile terminal makes communication using a longer insertion cycle selected from the cycle of inserting a non-transmission interval at the base station as a handover source and the cycle of inserting a non-transmission interval at the base station as a handover destination.

### Fourth Embodiment

A radio communication system, a base station, and a radio communication method according to this embodiment will be described below. In the below, a structure comparable to that of the above-described embodiments is identified by the same sign and illustrated in the drawings with the same sign. If appropriate, the detailed description of such a structure will be omitted.

### Configuration

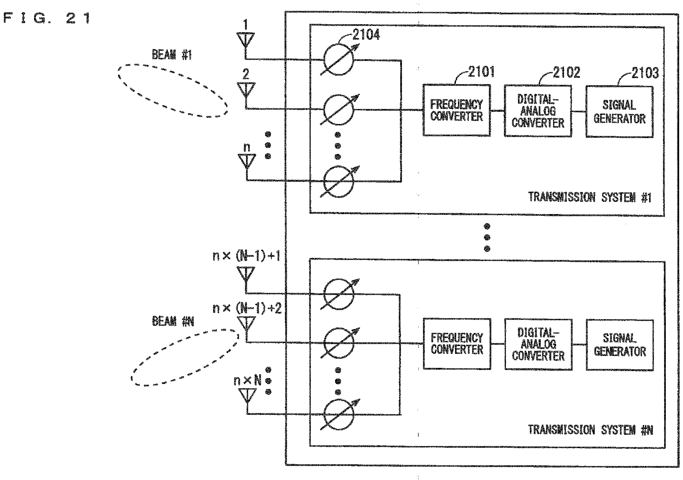

FIG. 21 illustrates the configuration of a transmitter that generates a plurality of beams by following an analog phase switching system.

As illustrated in FIG. 21, the following description is based on the assumption that N beams are to be formed using N transmission systems. Each of the transmission systems includes a frequency converter 2101, a digital-analog converter 2102, a signal generator 2103, and a plurality of phase adjusters 2104.

In this case, a pattern including the temporal length of a non-transmission interval and the temporal length of a CP can be set to differ between the beams. This allows use of a transmission format responsive to the capability of a counterpart device to achieve simultaneous communication with a plurality of counterpart devices having different capabilities.

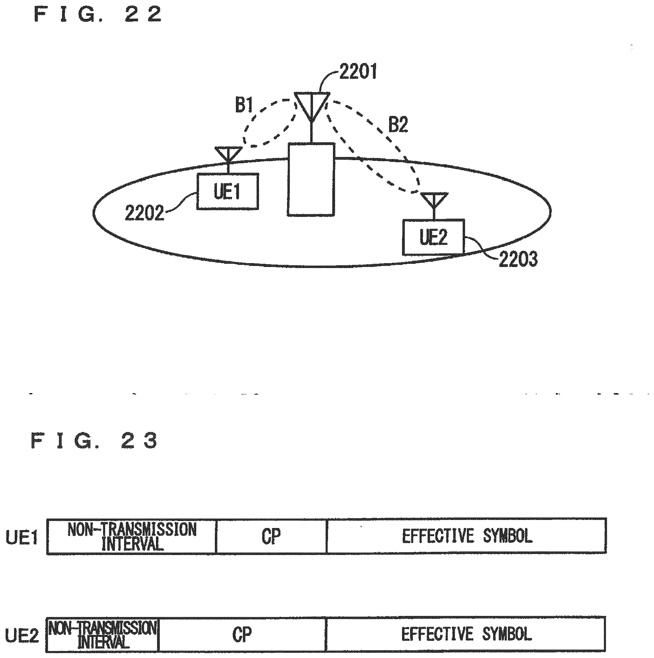

FIGS. 22 and 23 each describe a multipath propagation channel. As illustrated in FIG. 22, respective patterns each including the temporal length of a non-transmission interval and the temporal length of a CP can be set for a system between a transmitter 2201 and a counterpart device 2202 (system B1), and a system between the transmitter 2201 and a counterpart device 2203 (system B2).

If the counterpart device 2202 (UE 1) is in the vicinity of the transmitter 2201, for example, the influence of a multipath propagation channel is relatively small. Thus, a short temporal length can be set for a CP.

In contrast, if the counterpart device 2203 (UE 2) is far from the transmitter 2201, the influence of the multipath propagation channel becomes larger than in the system B1 to which the counterpart device 2202 in the vicinity of the transmitter 2201 belongs. This is handled effectively by setting a long temporal length for a CP.

As described above, by setting the temporal length of a CP in response to a corresponding beam, it can be less likely that the temporal length of a CP will be set at an excessive length if it is set to be equal for all beams. By doing so, a residual temporal length of a CP can become part of the temporal length of a non-transmission interval. Thus, power efficiency can be increased by powering off a power amplifier in the non-transmission interval.

In this embodiment, the sum of the temporal length of a non-transmission interval and the temporal length of a CP is constant in the counterpart device 2202 and the counterpart device 2203. This achieves commonality of a radio communication frame. Thus, control over an L2 such as retransmission of HARQ can be executed in common without dependence on UE, thereby simplifying the L2 process at a base station.

### Fifth Embodiment

A radio communication system, a base station, and a radio communication method according to this embodiment will be described below. In the below, a structure comparable to that of the above-described embodiments is identified by the same sign and illustrated in the drawings with the same sign. If appropriate, the detailed description of such a structure will be omitted.

Patterns including different temporal lengths of a non-transmission interval and different temporal lengths of a CP can be set in response to information in a symbol transmitted from a transmitter.

For example, if a channel is a shared channel or a shared signal containing significant information about an operating cell, setting a long temporal length for a CP is effective in terms of minimizing reduction in power efficiency caused by delay increase resulting from a multipath transmission channel.

If a channel is a dedicated channel or a dedicated signal for high-speed data communication to cause serious reduction in power efficiency of a transmitter, for example, in terms of increasing power efficiency, a short temporal length is set for a CP and a long temporal length is set for a non-transmission interval. By doing so, power efficiency can be increased by powering off a power amplifier in the non-transmission interval.

### Effects

Effects achieved by the above-described embodiments of the invention will be described next. The effects described below are achieved by the specific structures illustrated in the above-described embodiments. However, as long as comparable effects are to be achieved, these particular structures can be replaced by different particular structures illustrated in the present description. This replacement can be made across two or more of the embodiments. Specifically, structures illustrated in different embodiments can be combined, as long as such a combination achieves a comparable effect.

According to the above-described embodiments, in a radio communication system that makes radio communication through transmission and reception of a plurality of radio communication frames, the radio communication frames include successive radio communication frames, at least one of which is a radio communication frame including an effective symbol, and a cyclic prefix and a non-transmission interval added to the effective symbol.

This configuration achieves switching of analog control such as phase or amplitude control, while suppressing reduction in power efficiency resulting from a multipath propagation channel.

Switching of analog control such as phase or amplitude control includes switching of beam directivity using a multi-element antenna, for example.

Making switching of analog control such as phase or amplitude control in the non-transmission interval makes it possible to prevent the occurrence of an unwanted wave due to transient response caused by switching of analog control such as phase or amplitude control. Further, as a result of insertion of the CP in the radio communication frame, energy loss resulting from a multipath propagation channel can be suppressed.

The structures illustrated in the present description other than the above-described structures can be omitted, where appropriate. Specifically, the above-described structures can alone achieve the above-described effects. However, the above-described effects can also be achieved by adding at least one of the other structures illustrated in the present description to the above-described structures properly, specifically, by adding the other structures illustrated in the present description and not included in the above-described structures to the above-described structures.

According to the above-described embodiments, in the radio communication frame, the non-transmission interval is added temporally before the cyclic prefix.

This configuration achieves setting in such a manner that an interval made unstable by transient response corresponds to the non-transmission interval.

According to the above-described embodiments, the temporal length of the non-transmission interval is set based on the speed of transient response by equipment to transmit and receive the radio communication frames.

This configuration achieves setting in such a manner that an interval made unstable by transient response corresponds to the non-transmission interval, and that stable response is achieved in a subsequent CP interval.

According to the above-described embodiments, the temporal length of the cyclic prefix is set based the radius of a cell for radio communication or the length of a propagation channel for the radio communication.

This configuration achieves reduction in intersymbol interference effectively.

According to the above-described embodiments, the temporal length of the cyclic prefix is set based on transmission power for transmission of the radio communication frames.

This configuration achieves reduction in intersymbol interference effectively.

According to the above-described embodiments, the sum of the temporal length of the non-transmission interval and the temporal length of the cyclic prefix in each of the radio communication frames is constant.

This configuration achieves commonality of the radio communication frames. Thus, control over an L2 can be executed in common without dependence on UE.

According to the above-described embodiments, a combination of the temporal length of the non-transmission interval and the temporal length of the cyclic prefix is selected from a format list of the radio communication frames.

In this configuration, combinations each including the temporal length of the non-transmission interval and the temporal length of the CP are determined in advance in a list form. This achieves reduction in the amount of information required for setting the temporal length of the non-transmission interval and the temporal length of the CP.

According to the above-described embodiments, the temporal length of the non-transmission interval is set based on a temporal length required for switching of transmission power for transmission of the radio communication frames.

According to this configuration, in the case of a base station having the capability to change beam directivity at a high speed through digital control, for example, a non-transmission interval to be set can only be a non-transmission interval for switching of transmission power. This achieves reduction in a non-transmission interval. In the case of a base station allowed only to execute beam directivity control at a relatively low speed through analog control, for example, a non-transmission interval can be increased.

According to the above-described embodiments, a plurality of base stations is provided. For handover from a first base station out of the plurality of base stations to a second base station out of the plurality of base stations, the temporal length of the non-transmission interval is set based on a longer one of the temporal length of the non-transmission interval determined in advance at the first base station and the temporal length of the non-transmission interval determined in advance at the second base station.

This configuration achieves reduction in intersymbol interference effectively.

According to the above-described embodiments, the base station transmits a plurality of beams, and the temporal length of the non-transmission interval and the temporal length of the cyclic prefix differ between the beams.

This configuration allows use of a transmission format responsive to the capability of a counterpart device to achieve simultaneous communication with a plurality of counterpart devices having different capabilities.

### Modifications

In the above-described embodiments, each component may be described in terms of a viewpoint such as dimension, shape, arrangement relative to a different component, or a condition for implementation, etc. However, these viewpoints described in the present description are in all aspects illustrative and not restrictive. Thus, numerous modifications not illustrated are assumed to be included within the technical scope disclosed in the present description. These modifications include modification, addition, or omission of at least one component, and extraction of at least one component from at least one of the embodiments and combination of the extracted component with a component in a different embodiment, for example.

As long as no contradiction is to occur, a component described in a "singular form" in the embodiments may include "one or more" such components. Further, each component is a conceptual unit. An instance where one component is formed of a plurality of structures, an instance where one component corresponds to a part of some structure, and an instance where a plurality of components is provided in one structure are covered. Each component includes a structure having a different configuration or a different shape, as long as such a structure fulfills the same function.

The explanation given in the present description should in all aspects be referred to for all purposes relating to the invention in the present description and should never be recognized as a background art.

Each component in the above-described embodiments is assumed to function as software or firmware, and as corresponding hardware. Each component falling in both of these concepts is called a "unit" or a "processing circuit," for example.

### Explanation of Reference Signs

- 200: Communication system
- 201: E-UTRAN
- 202, 703, 1601: Mobile terminal
- 203, 1201, 1602, 1603: Base station
- 203-1: eNB group
- 203-2: Home-eNB group
- 204: MME unit
- 204a, 1604: MME
- 205: HeNBGW
- 206: Home-eNB
- 207: eNB
- 301, 403: Protocol processor
- 302: Application unit
- 303, 404: Transmission data buffer unit
- 304, 405: Encoder unit
- 305, 406: Modulating unit
- 306, 407, 808, 906, 2101: Frequency converter
- 307, 408: Antenna
- 308, 409: Demodulating unit
- 309, 410: Decoder unit
- 310, 411, 506: Controller
- 401: EPC communication unit
- 402: Different base station communication unit
- 501: PDN GW communication unit
- 502: Base station communication unit
- 503: User plane communication unit
- 504: HeNBGW communication unit
- 505: Control plane controller
- 505-1: NAS security unit
- 505-2: SAE bearer control unit
- 505-3: Idle state mobility managing unit
- 701, 702: Coverage
- 704, 705: Coverage
- 706, 707, 708: Coverage
- 801, 901, 2201: Transmitter
- 802: Digital signal processor
- 803: Digital signal processor controller
- 804, 902, 2103: Signal generator
- 805, 904: Power adjuster
- 806, 905, 2104: Phase adjuster
- 807, 903, 2102: Digital-analog converter
- 809, 907: Power amplifier
- 810: Power amplifier controller
- 811, 909: Transmission antenna
- 908: Analog controller
- 1001: CP insertion unit
- 1002, 1103, 1403: Effective symbol
- 1503, 1703, 1803: Effective symbol
- 1101, 1401: Non-transmission interval
- 1502, 1701, 1801: Non-transmission interval
- 1102, 1402: CP
- 1501, 1702, 1802: CP
- 1202: Antenna device
- 1301: Cell base station
- 2202, 2203: Counterpart device

## Claims

1. A radio communication system that makes radio communication through transmission and reception of a plurality of radio communication frames, wherein the plurality of radio communication frames includes successive radio communication frames, at least one of which is a radio communication frame including an effective symbol to which a cyclic prefix and a non-transmission interval are added.

2. The radio communication system according to claim 1,
wherein in the radio communication frame, the non-transmission interval is added temporally before the cyclic prefix.

3. The radio communication system according to claim 1 or 2,
wherein the temporal length of the non-transmission interval is set based on the speed of transient response by equipment to transmit or receive the radio communication frames.

4. The radio communication system according to any one of claims 1 to 3,
wherein the temporal length of the cyclic prefix is set based the radius of a cell for radio communication or the length of a propagation channel for the radio communication.

5. The radio communication system according to any one of claims 1 to 4,
wherein the temporal length of the cyclic prefix is set based on transmission power for transmission of the radio communication frames.

6. The radio communication system according to any one of claims 1 to 5,
wherein the sum of the temporal length of the non-transmission interval and the temporal length of the cyclic prefix in each of the radio communication frames is constant.

7. The radio communication system according to any one of claims 1 to 6,
wherein a combination of the temporal length of the non-transmission interval and the temporal length of the cyclic prefix is selected from a format list of the radio communication frames.

8. The radio communication system according to any one of claims 1 to 7,
wherein the temporal length of the non-transmission interval is set based on a temporal length required for switching of transmission power for transmission of the radio communication frames.

9. A base station that makes radio communication through transmission and reception of a plurality of radio communication frames,
wherein the plurality of radio communication frames includes successive radio communication frames, at least one of which is a radio communication frame including an effective symbol to which a cyclic prefix and a non-transmission interval are added.

10. The base station according to claim 9,
wherein the base station includes a plurality of base stations, and wherein for handover from a first base station out of the plurality of base stations to a second base station out of the plurality of base stations, the temporal length of the non-transmission interval is set based on a longer one of the temporal length of the non-transmission interval determined in advance at the first base station and the temporal length of the non-transmission interval determined in advance at the second base station.

11. The base station according to claim 9 or 10,
wherein the base station transmits a plurality of beams, and
wherein the temporal length of the non-transmission interval and the temporal length of the cyclic prefix differ between the beams.

12. The base station according to any one of claims 9 to 11,
wherein the sum of the temporal length of the non-transmission interval and the temporal length of the cyclic prefix in each of the radio communication frames is constant.

13. A radio communication method of making radio communication through transmission and reception of a plurality of radio communication frames,
wherein the plurality of radio communication frames includes successive radio communication frames, at least one of which is a radio communication frame including an effective symbol to which a cyclic prefix and a non-transmission interval are added.

14. The radio communication method according to claim 13,
wherein the sum of the temporal length of the non-transmission interval and the temporal length of the cyclic prefix in each of the radio communication frames is constant.
